# EUROPEAN PATENT APPLICATION

(11) **EP 0 970 791 A1**
(43) Date of publication of application: **12.01.2000**
(21) Application number: 99112550.1
(22) Date of filing: 01.07.1999
(51) Int. Cl.: B29B 17/00, B09B 3/00

(54) **Device for the reduction of the overall dimensions of plastic containers using heat**

(30) Priority: 06.07.1998 IT BG980021 U
(71) Applicant: Floraholding Italiana S.r.l., 24036 Ponte S. Pietro (Bergamo) (IT)
(72) Inventor: Triggianese, Doriano, 24010 Costa Serina (Bergamo) (IT)
(74) Representative: Ripamonti, Enrico, Dr. Ing.

(57) **Abstract**

Device for the reduction of the overall dimensions of plastic containers, such as polystyrene, polyethylene, poly vinyl chloride, traditionally used for food products through a heating process. Said device including a unit containing a treatment compartment, accessible through a door and containing means for switching on, inside the compartment, the circulation of heated air for the thermal reduction of the dimensions of the containers.

## Description

This utility model refers to a device, designed particularly for domestic use, employed in the thermal reduction of the overall dimensions of particular waste products such as bottles, trays and containers in general made in plastic materials, specifically polystyrene, polyethylene and poly vinyl chloride, and destined for containers used in the sale of food products.

One of the main problems of our society today is the disposal of waste. Waste disposal involves various costly phases ranging from its household collection to its destruction and final transfer to rubbish dumps. Just household collection alone involves a considerable number of operations, deriving from the need to divide the rubbish into the various different categories, and this becomes particularly difficult when dealing with bottles, trays and containers in general, made in plastic materials such as polystyrene, polyethylene and poly vinyl chloride whose overall dimensions are such that they quickly fill up the household rubbish bins in which they are put. You just have to think, for example, of the trays and boxes in which fruit, vegetables and suchlike are sold. These take up so much space that only two or three of them fill up all the space of the bins usually used in the home because it is not easy to reduce their size mechanically. In the case of bottles, even crushing does not reduce the space they take up to any great extent.

The chief aim of this invention is to create a product that will succeed in considerably reducing the space occupied by the above-mentioned plastic materials by exploiting their capacity to contract when subjected to heat. This reduction can reach as much as 95% and more (for certain types of rubbish of this kind) without causing combustion, with the resulting danger of fire and residues (due to the usual dusts present in the rubbish itself), difficult to remove because of their tendency to adhere strongly to the surfaces on which they are found.

This aim, as well as others that will be seen from the following detailed description, is achieved by means of a device which is characterised as illustrated in the claims.

It will be easier to understand the invention by studying the following detailed description, given as a pure indication of its preferred design form illustrated in the enclosed diagrams, in which:
figure 1 shows an outline of the device seen from the front;
figure 2 shows, again, an outline, of an A-A sectional view of fig. 1, and
figure 3 shows a plan view of the device.
Referring to the figures, 1 shows the overall device, including a box-like structure (parallelepipedal) 2 with a double metal wall 3,4 in the middle of which there is an air space and an insulating space 5.

The box-like structure contains a 6D compartment in which the plastic materials, such as polystyrene, polyethylene and poly vinyl chloride, usually used for "C" containers (bottles, trays, etc.) in which certain food stuffs (mineral water, soft drinks, vegetables, fruit, for example) are sold, are softened and contracted.

Access to compartment 6 is given through a glass door 7 surrounded and enclosed within a metal framework 8 by means of which the door is hinged (as in 9) on its vertical side to the structure of the box. On the other vertical side a handle or suchlike 10 will be fitted in order to be able to open the door.

The handle acts on a conventional bolt that engages with a conventional slot fitted on the box structure. An electric switch, not shown in the diagram, fitted near the handle, is used, as it will be easier to understand further on, to switch off the power supply to the electrical parts (described later) when the door is opened.

An electric motor 11 is fitted to the ceiling of the box, in any acceptable manner, with a vertical axis. This serves to switch on the centrifugal fan 12 whose function is to activate the circulation of heated air inside the compartment 6.

At least one electric, instantaneous resistance 13 (i.e. fundamentally without heat inertia) fitted inside the centrifugal fan 12, and therefore subjected to the current of air generated by it, is used to heat the air.

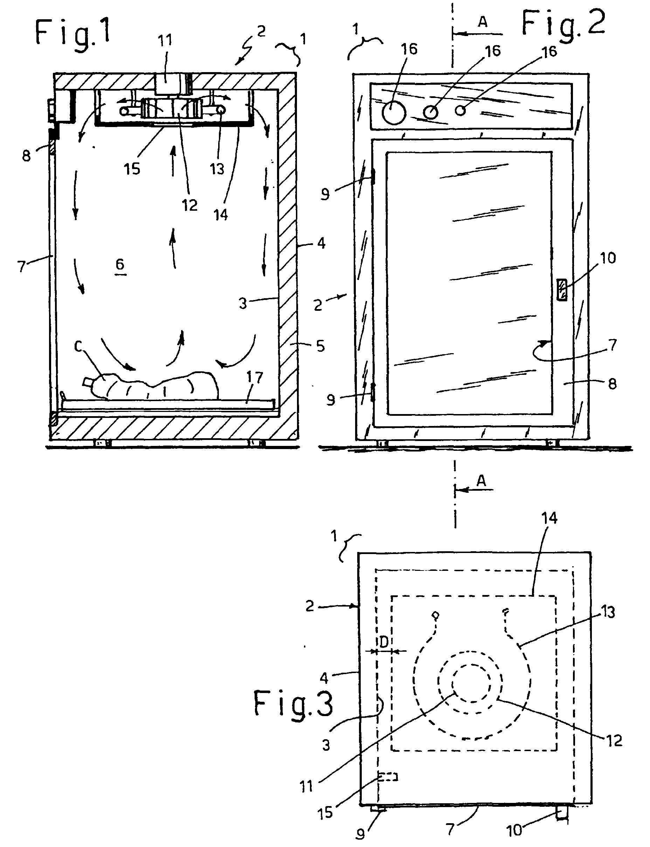

A diffusion plate 14 is fitted under the fan, in a fundamentally horizontal position, containing an aperture 15 that coincides with the inlet of the fan 12. The surround of this plate 14, shaped in a regular square, extends a distance "D" from the walls that enclose the compartment 6, so that when the fan is functioning it circulates hot air inside the compartment as shown by the arrows (figure 1).

A conventional thermostat 15, that can also be set by the user using a conventional knob on the front, is used to prevent the temperature in the compartment from exceeding a certain value (e.g. that at which the contraction of the plastic material of the container that the user has placed in compartment 6, takes place).

On the front of the box 2 various buttons 16 can be fitted with their own program designed to establish the specific times required for the treatment (contraction) of the plastic rubbish inserted C.

A very convenient extractable shelf 17 made in a non-stick material is fitted on the bottom of compartment 6. The rubbish C is placed on this shelf so that it can be easily removed from the compartment 6 after undergoing the heat treatment that has caused it to contract.

The device functions as follows:

After opening the door to the compartment 6, the rubbish of the type indicated is inserted; the door is closed and using a button (for example, the timer button mentioned before) the following devices are put into action: the fan 12, a LED luminous light that shows when the device is running, the resistance 13 and an internal lighting bulb. In this way the compartment 6 heats up quickly.

The thermostat 15 checks that the temperature does not go above the set threshold. After the heating process, the rubbish C contracts considerably; at the end of the treatment, the power supply is switched off, the door is opened and the rubbish can be removed from the compartment using the extractable shelf 17.

## Claims

1. A device for the thermal reduction of the overall dimensions of plastic containers, such as polystyrene, polyethylene and poly vinyl chloride, traditionally used for food-stuffs, characterised by the fact that it is made up of a body composed of a treatment compartment accessible through a door and containing means for activating the circulation of heated air, inside the compartment, used for the reduction of the overall dimensions of the containers through a thermal process.

2. A device according to claim 1, in which the activating means are composed of an electric motor, a centrifugal fan activated by this motor, at least one electric resistance fitted around the fan, a deflector fitted below the fan equipped with a suction inlet coinciding with the fan and a surround fitted at a distance from the walls of the compartment, all located on the compartment ceiling.

3. A device, according to the previous claims, in which timers are fitted to control the duration of the thermal treatment.

4. A device according to one or more of the previous claims, in which a thermostatic temperature-controlling device is fitted.

5. A device according to the previous claims, in which access to the treatment compartment is obtained via a glass door with a closing mechanism that interrupts the power supply when the door is opened.

6. A device according to the previous claims, in which the base of the compartment is fitted with an extractable shelf covered in a non-stick material.

7. A device according to the previous claims, in which the resistances are of the instantaneous type.
